# EUROPEAN PATENT SPECIFICATION

(11) **EP 4 234 288 B1**
(45) Date of publication and mention of the grant of the patent: **28.10.2026**
(21) Application number: 23158288.3
(22) Date of filing: 23.02.2023
(51) Int. Cl.: B60H 1/00, B64D 13/06

(54) **VEHICLE CABIN AIR TEMPERATURE CONTROL USING A PULSE WIDTH MODULATED THREE-WAY SOLENOID VALVE**
FAHRZEUGKABINENLUFTTEMPERATURSTEUERUNG MIT EINEM PULSBREITENMODULIERTEN ELEKTROMAGNETVENTIL
RÉGULATION DE LA TEMPÉRATURE DE L'AIR DANS LA CABINE D'UN VÉHICULE À L'AIDE D'UNE VANNE ÉLECTROMAGNÉTIQUE TROIS VOIES À MODULATION DE LARGEUR D'IMPULSION

(30) Priority: 24.02.2022 US 202263313507 P; 09.03.2022 US 202217690128
(43) Date of publication of application: 30.08.2023
(73) Proprietor: Hamilton Sundstrand Corporation, Charlotte, NC 28217-4578 (US)
(72) Inventor: MUGURUSA, Diego S., North Haven, 06473 (US); HIMMELMANN, Ashley, Hartford, CT, 06103 (US)
(74) Representative: Dehns

(56) References cited:
- WO-A1-2014/196138
- US-B2- 9 863 671

## Description

### BACKGROUND

Exemplary embodiments pertain to the art of vehicle cabin air temperature control and, in particular, to vehicle cabin air temperature control using a pulse width modulated three-way solenoid valve.

In a vehicle cabin, such as the passenger cabin of an aircraft, air temperature, humidity, and pressure are controlled for the safety and comfort of occupants. A cabin air heat exchanger may be used to cool down and recycle air that has been warmed in the vehicle cabin. Specifically, the heated air from the vehicle cabin transfers heat to a coolant. The temperature of the coolant, the flow rate of the coolant, or both may be modulated prior to entering the cabin air heat exchanger. A vehicle temperature control is disclosed in WO 2014/196138 A1.

### BRIEF DESCRIPTION

In one aspect, a vehicle cabin air temperature controller is provided as defined by claim 1.

In another aspect, a method of assembling a vehicle cabin air temperature controller is provided as defined by claim 3.

### BRIEF DESCRIPTION OF THE DRAWINGS

The following descriptions should not be considered limiting in any way. With reference to the accompanying drawings, like elements are numbered alike:
FIG. 1 illustrates aspects of an aircraft that includes vehicle cabin air temperature control using a pulse width modulated three-way solenoid valve according to one or more embodiments;
FIG. 2 shows a flow diagram for controlling the flow rate of the coolant, provided for use in the cabin air heat exchanger, with a pulse width modulated three-way solenoid valve according to one or more embodiments; and
FIG. 3 is a block diagram detailing aspects of the controller according to one or more embodiments.

### DETAILED DESCRIPTION

A detailed description of one or more embodiments of the disclosed apparatus and method are presented herein by way of exemplification and not limitation with reference to the Figures.

Embodiments of the systems and methods detailed herein relate to vehicle cabin air temperature control using a pulse width modulated three-way solenoid valve. As previously noted, a cabin air heat exchanger may be used to cool air for reuse in a vehicle cabin such as an airplane cabin. The flow rate of the coolant may be controlled prior to its use in the cabin air heat exchanger. A prior approach to modulating coolant flow rate involves the use of a three-way modulating valve (TWMV) to control the fraction of coolant flow provided to a cooling leg, which enters the cabin air heat exchanger, and to a bypass leg that bypasses the cabin air heat exchanger. However, TWMVs are complex and expensive to design and produce. As detailed, the function of controlling the fraction of the coolant flow provided to the cooling leg and the bypass leg is accomplished via pulse width modulation of a two-position, three-way solenoid valve. While an aircraft cabin is specifically shown and discussed for explanatory purposes, the vehicle cabin air temperature control detailed herein may apply to a spacecraft, automobile, or other vehicle cabin or other cooled space.

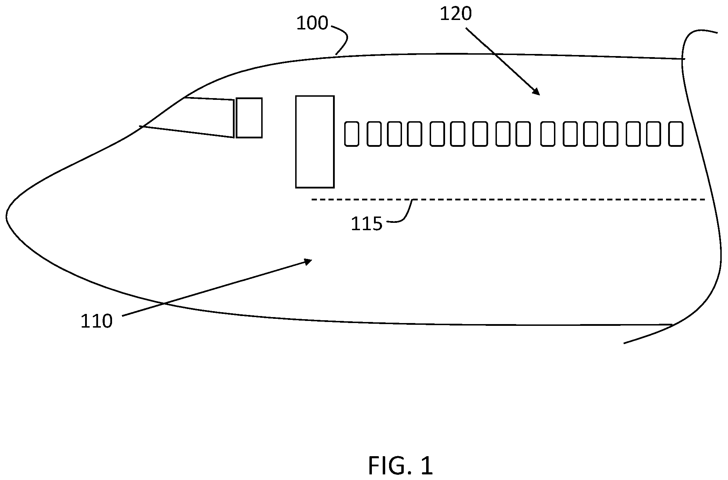

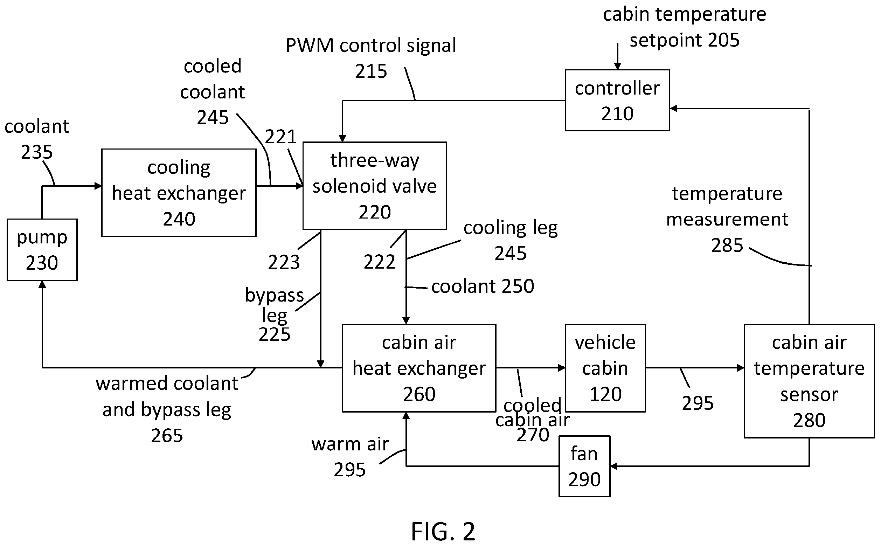

FIG. 1 illustrates aspects of an aircraft 100 that includes vehicle cabin air temperature control using a pulse width modulated three-way solenoid valve 220 (FIG. 2) according to one or more embodiments. The exemplary aircraft 100 includes a cargo compartment 110 and the vehicle cabin 120 (i.e., passenger compartment), separated by a divider 115 that is generally indicated by the dashed line in FIG. 1. While the exemplary vehicle cabin 120 is shown as one level, the vehicle cabin 120 may include multiple levels according to alternate embodiments.

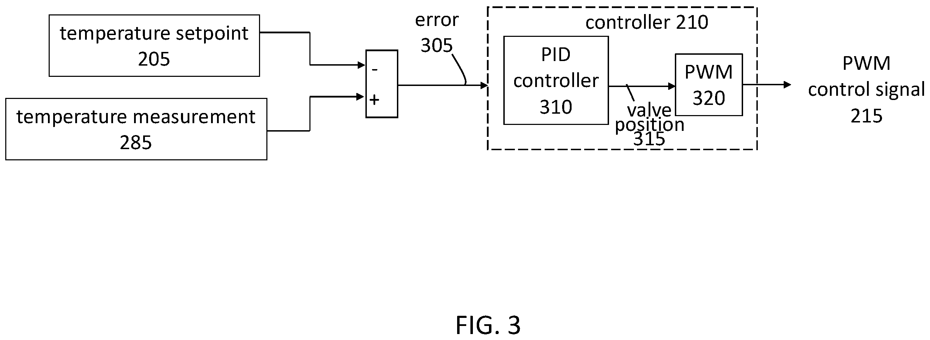

FIG. 2 shows a flow diagram 200 for controlling the flow rate of the coolant 250, provided for use in the cabin air heat exchanger 260, with a pulse width modulated three-way solenoid valve 220 according to one or more embodiments. The three-way solenoid valve 220 includes one inlet 221 and two outlets 222, 223, as indicated, and is, therefore, a two-position three-way solenoid valve. Cooled coolant 245 is supplied to the inlet 221 by a pump 230 via a cooling heat exchanger 240. The three-way solenoid valve 220 is a two-position valve such that all of the output flow is to one of the outlets 222, 223 (i.e., either to the cooling leg 226 or to the bypass leg 225). The controller 210 provides a pulse width modulation (PWM) control signal 215 to control which of the two outlets 222, 223 of the three-way solenoid valve 220 (i.e., cooling leg 226 or bypass leg 225) is supplied with the cooled coolant 245 entering the inlet 221. The controller 210 operation is detailed in FIG. 3.

As shown, the cooled coolant 245 that is provided at the inlet 221 of the three-way solenoid valve 220 from the pump 230 is coolant 235 that is cooled by a cooling heat exchanger 240. This cooled coolant 245 is directed to either the cooling leg 226 or to the bypass leg 225 by the three-way solenoid valve 220. Only the cooled coolant 245 in the cooling leg 226 (i.e., coolant 250) is provided to the cabin air heat exchanger 260. The flowrate of the coolant 250 provided to the cabin air heat exchanger 260 over a predefined time period is controlled, via control of the three-way solenoid valve 220 by the controller 210, based on how much of the cooled coolant 245 enters the cabin air heat exchanger 260 during the predefined period via the cooling leg 226 (i.e., as coolant 250) as opposed to bypassing the cabin air heat exchanger 260 during the predefined period via the bypass leg 225.

The cabin air heat exchanger 260 receives the coolant 250 from the cooling leg 226 and warm air 295, whose temperature has been sensed by the cabin air temperature sensor 280, from the vehicle cabin 120 via a fan 290. The coolant 250 cools the warm air 295 from the vehicle cabin 1220 in the cabin air heat exchanger 260. The resulting warmed coolant 265 is combined with cooled coolant 245 in the bypass leg 225 and provided to the pump 230 to be recirculated to the three-way solenoid valve 220 via the cooling heat exchanger 240. The cooled cabin air 270 is provided to the vehicle cabin 1220. The temperature measurement 285 obtained by the cabin air temperature sensor 280 provides an estimate of the current air temperature in the vehicle cabin 120 and is provided to the controller 210.

FIG. 3 is a block diagram detailing aspects of the controller 210 according to one or more embodiments. As shown, a difference (i.e., error 305) is obtained between the temperature measurement 285 (i.e., the estimate of the current air temperature in the vehicle cabin 120 sensed by the cabin air temperature sensor 280) and the cabin temperature set point 205. In the controller 210, this difference is provided as an error 305 to a proportional-integral-derivative (PID) controller 310.

The PID controller 310 is a known control loop mechanism that applies a correction to the error 305 based on proportional, integral, and derivative terms and outputs a control variable to minimize the error 305. In this case, the control variable is a valve position 315 between 0 and 1. In the case of the two-position three-way solenoid valve 220, this valve position 315 between 0 and 1 is translated, via pulse width modulator (PWM) of the controller, to a duty cycle (i.e., PWM control signal 215 that indicates the percentage of time that the three-way solenoid valve 220 directs flow to the cooling leg 226 and percentage of time that the three-way solenoid valve 220 directs flow to the bypass leg 225).

The duty cycle indicated by the pulse width modulator 320 must be achieved within a period of time referred to as the PWM period. This PWM period may be predefined or controlled. The PWM period may affect passenger perception of the flow rate of the coolant 250 to obtain the desired temperature of the cooled cabin air 270 (i.e., the cabin temperature setpoint 205). For example, for a duty cycle of 50 percent indicated by the pulse width modulator 320, a PWM period of one minute may result in the cooling leg 245 and bypass leg 225 being alternately supplied for 30 seconds each while a PWM period of ten minutes may result in the cooling leg 245 and the bypass leg 225 being alternately supplied for five minutes. This former may be imperceptible to passengers in the vehicle cabin 120 while the later may be noticeable. This PWM period may be predefined or controlled and additionally defined with the PWM control signal 215.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A vehicle cabin air temperature control system arranged to be provided, in use, in a vehicle cabin and to provide cooled cabin air for use in the vehicle cabin, the system comprising:
a coolant pump (230);
a two-position three-way solenoid valve (220) with one inlet (221) arranged to take in coolant supplied by the pump (230), a first outlet (222), and a second outlet (223);
a controller (210) arranged to control flow of the coolant via the first outlet and the second outlet of the solenoid valve;
a cabin air heat exchanger (260);
a cooling leg (245) connecting the first outlet (222) of the three-way solenoid valve (220) to the cabin air heat exchanger;
a bypass leg (225) connecting the second outlet (223) of the three-way solenoid valve (220) to the pump (230) bypassing the cabin air heat exchanger (260);
the cabin air heat exchanger (260) arranged to obtain an input coolant via the cooling leg (245) based on the control of the flow via the first outlet and the second outlet and to output cooled cabin air, and wherein the cabin air heat exchanger is arranged to obtain warm air from the vehicle cabin and to cool the warm air with the input coolant to provide the cooled cabin air;
wherein the control of the flow of the coolant via the first outlet and the second outlet controls a flow rate of the input coolant;
a temperature sensor (280) configured to measure a temperature of the warm air from the vehicle cabin, in use, provided to the cabin air heat exchanger and to provide the temperature of the warm air to the controller as a basis for subsequent control of the first outlet and the second outlet;
wherein the controller includes a proportional-integral-derivative, PID, controller (310) and a pulse width modulator (320) configured and arranged to provide a pulse width modulation control signal to the three-way solenoid valve, and wherein the pulse width modulation control signal is based on a difference between a desired temperature for the vehicle cabin and the temperature of the warm air; and further comprising:
a cooling heat exchanger (240) arranged to be disposed between the pump (230) and the solenoid valve (220).

2. The vehicle cabin air temperature controller according to claim 1, wherein the cooling heat exchanger (240) is arranged to cool the coolant that is, in use, supplied by the pump (230) such that cooled coolant is taken in at the inlet of the solenoid valve and output, in use, to the cooling leg via the first outlet or the bypass leg via the second outlet of the solenoid valve.

3. A method of assembling a vehicle cabin air temperature control system arranged to be provided, in use, in a vehicle cabin and to provide cooled cabin air for use in the vehicle cabin, the method comprising:
positioning a two-position three-way solenoid valve (220) with an inlet (221), a first outlet (222), and a second outlet (223) to take in coolant supplied by a coolant pump (230);
configuring a controller (210) to control flow of the coolant via the first outlet and the second outlet of the solenoid valve,
arranging a cabin air heat exchanger (260) to obtain an input coolant based on the control of the flow via the first outlet and the second outlet and to provide cooled cabin air to the vehicle cabin,
connecting the first outlet (222) of the three-way solenoid valve (220) to the cabin air heat exchanger via a cooling leg (245);
connecting the second outlet (223) of the three-way solenoid valve (220) to the pump (230) bypassing the cabin air heat exchanger (260) via a bypass leg (225);
arranging the cabin air heat exchanger (260) to obtain an input coolant via the cooling leg (245) based on the control of the flow via the first outlet and the second outlet and to output cooled cabin air, and wherein the cabin air heat exchanger is arranged to obtain warm air from the vehicle cabin and to cool the warm air with the input coolant to provide the cooled cabin air;
wherein the control of the flow of the coolant via the first outlet and the second outlet controls a flow rate of the input coolant;
arranging a temperature sensor (280) to measure a temperature of the warm air from the vehicle cabin provided to the cabin air heat exchanger and to provide the temperature of the warm air to the controller as a basis for subsequent control of the first outlet and the second outlet;
wherein the configuring the controller includes configuring the controller to include a proportional-integral-derivative, PID, controller (310) and a pulse width modulator (320) to provide a pulse width modulation control signal to the three-way solenoid valve, and optionally wherein the pulse width modulation control signal is based on a difference between a desired temperature for the vehicle cabin and the temperature of the warm air; and
further comprising disposing a cooling heat exchanger (240) between the pump and the solenoid valve.

4. The method according to claim 3, wherein the disposing the cooling heat exchanger includes the cooling heat exchanger being disposed to cool the coolant that is supplied by the pump such that cooled coolant is taken in at the inlet of the solenoid valve and output to the cooling leg via the first outlet or the bypass leg via the second outlet of the solenoid valve, and optionally wherein the arranging the cabin air heat exchanger includes only the cooled coolant output to the cooling leg via the first outlet being supplied as the input coolant to the cabin air heat exchanger such that control of the flow via the first outlet and the second outlet controls the flow rate of the input coolant.

## Patentansprüche

1. Fahrzeugkabinenlufttemperatursteuerungssystem, das so angeordnet ist, dass es im Gebrauch in einer Fahrzeugkabine bereitgestellt ist und gekühlte Kabinenluft zur Verwendung in der Fahrzeugkabine bereitstellt, wobei das System umfasst:
eine Kühlmittelpumpe (230);
ein Zwei-Positionen-Drei-Wege-Elektromagnetventil (220) mit einem Einlass (221), der so angeordnet ist, dass er das Kühlmittel aufnimmt, das von der Pumpe (230) zugeführt wird,
einem ersten Auslass (222) und einem zweiten Auslass (223);
eine Steuerung (210), die so angeordnet ist, dass sie den Fluss des Kühlmittels über den ersten Auslass und den zweiten Auslass des Elektromagnetventils steuert;
einen Kabinenluftwärmetauscher (260);
einen Kühlzweig (245), der den ersten Auslass (222) des Drei-Wege-Elektromagnetventils (220) mit dem Kabinenluftwärmetauscher verbindet;
einen Umgehungszweig (225), der den zweiten Auslass (223) des Drei-Wege-Elektromagnetventils (220) unter Umgehung des Kabinenluftwärmetauschers (260) mit der Pumpe (230) verbindet;
wobei der Kabinenluftwärmetauscher (260) so angeordnet ist, dass er ein Eingangskühlmittel über den Kühlzweig (245) basierend auf der Steuerung des Flusses über den ersten Auslass und den zweiten Auslass erhält und gekühlte Kabinenluft ausgibt, und wobei der Kabinenluftwärmetauscher so angeordnet ist, dass er warme Luft aus der Fahrzeugkabine erhält und die warme Luft mit dem Eingangskühlmittel kühlt, um die gekühlte Kabinenluft bereitzustellen;
wobei die Steuerung des Flusses des Kühlmittels über den ersten Auslass und den zweiten Auslass eine Durchflussrate des Eingangskühlmittels steuert;
einen Temperatursensor (280), der konfiguriert ist, um eine Temperatur der warmen Luft aus der Fahrzeugkabine zu messen, die im Gebrauch dem Kabinenluftwärmetauscher bereitgestellt wird,
und um die Temperatur der warmen Luft der Steuerung als eine Basis für eine nachfolgende Steuerung des ersten Auslasses und des zweiten Auslasses bereitzustellen;
wobei die Steuerung einen Proportional-Integral-Derivativ-Regler (PID-Regler) (310) und einen Pulsbreitenmodulator (320) beinhaltet, die konfiguriert und angeordnet sind, um dem Drei-Wege-Elektromagnetventil ein Pulsbreitenmodulationssteuersignal bereitzustellen, und wobei das Pulsbreitenmodulationssteuersignal auf einer Differenz zwischen einer gewünschten Temperatur für die Fahrzeugkabine und der Temperatur der warmen Luft basiert; und ferner umfassend:
einen Kühlwärmetauscher (240), der so angeordnet ist, dass er zwischen der Pumpe (230) und dem Elektromagnetventil (220) angeordnet ist.

2. Fahrzeugkabinenlufttemperatursteuerung nach Anspruch 1, wobei der Kühlwärmetauscher (240) so angeordnet ist, dass er das Kühlmittel, das im Gebrauch von der Pumpe (230) zugeführt wird, derart kühlt, dass das gekühlte Kühlmittel an dem Einlass des Elektromagnetventils aufgenommen wird und im Gebrauch über den ersten Auslass an den Kühlzweig oder über den zweiten Auslass des Elektromagnetventils an den Umgehungszweig ausgegeben wird.

3. Verfahren zum Montieren eines Fahrzeugkabinenlufttemperatursteuerungssystems, das so angeordnet ist, dass es im Gebrauch in einer Fahrzeugkabine bereitgestellt ist und gekühlte Kabinenluft zur Verwendung in der Fahrzeugkabine bereitstellt, wobei das Verfahren Folgendes umfasst:
Positionieren eines Zwei-Positionen-Drei-Wege-Elektromagnetventils (220) mit einem Einlass (221), einem ersten Auslass (222) und einem zweiten Auslass (223), um das Kühlmittel aufzunehmen, das von einer Kühlmittelpumpe (230) zugeführt wird;
Konfigurieren einer Steuerung (210), um den Fluss des Kühlmittels über den ersten Auslass und den zweiten Auslass des Elektromagnetventils zu steuern,
Anordnen eines Kabinenluftwärmetauschers (260), um ein Eingangskühlmittel basierend auf der Steuerung des Flusses über den ersten Auslass und den zweiten Auslass zu erhalten und der Fahrzeugkabine gekühlte Kabinenluft bereitzustellen,
Verbinden des ersten Auslasses (222) des Drei-Wege-Elektromagnetventils (220) mit dem Kabinenluftwärmetauscher über einen Kühlzweig (245);
Verbinden des zweiten Auslasses (223) des Drei-Wege-Elektromagnetventils (220) mit der Pumpe (230) unter Umgehung des Kabinenluftwärmetauschers (260) über einen Umgehungszweig (225);
Anordnen des Kabinenluftwärmetauschers (260), um ein Eingangskühlmittel über den Kühlzweig (245) basierend auf der Steuerung des Flusses über den ersten Auslass und den zweiten Auslass zu erhalten und gekühlte Kabinenluft auszugeben, und
wobei der Kabinenluftwärmetauscher so angeordnet ist, dass er warme Luft aus der Fahrzeugkabine erhält und die warme Luft mit dem Eingangskühlmittel kühlt, um die gekühlte Kabinenluft bereitzustellen;
wobei die Steuerung des Flusses des Kühlmittels über den ersten Auslass und den zweiten Auslass eine Durchflussrate des Eingangskühlmittels steuert;
Anordnen eines Temperatursensors (280), um eine Temperatur der warmen Luft aus der Fahrzeugkabine zu messen, die dem Kabinenluftwärmetauscher bereitgestellt wird, und um die Temperatur der warmen Luft der Steuerung als eine Basis für eine nachfolgende Steuerung des ersten Auslasses und des zweiten Auslasses bereitzustellen;
wobei das Konfigurieren der Steuerung ein Konfigurieren der Steuerung beinhaltet, um einen Proportional-Integral-Derivativ-Regler (PID-Regler) (310) und einen Pulsbreitenmodulator (320) zu beinhalten, um dem Drei-Wege-Elektromagnetventil ein Pulsbreitenmodulationssteuersignal bereitzustellen, und wobei optional das Pulsbreitenmodulationssteuersignal auf einer Differenz zwischen einer gewünschten Temperatur für die Fahrzeugkabine und der Temperatur der warmen Luft basiert; und
ferner umfassend ein Anordnen eines Kühlwärmetauschers (240) zwischen der Pumpe und dem Elektromagnetventil.

4. Verfahren nach Anspruch 3, wobei das Anordnen des Kühlwärmetauschers beinhaltet, dass der Kühlwärmetauscher so angeordnet ist, dass er das Kühlmittel kühlt, das von der Pumpe zugeführt wird, derart, dass das gekühlte Kühlmittel an dem Einlass des Elektromagnetventils aufgenommen wird und über den ersten Auslass an den Kühlzweig oder über den zweiten Auslass des Elektromagnetventils an den Umgehungszweig ausgegeben wird, und wobei optional das Anordnen des Kabinenluftwärmetauschers beinhaltet, dass nur das gekühlte Kühlmittel, das über den ersten Auslass an den Kühlzweig ausgegeben wird, dem Kabinenluftwärmetauscher als das Eingangskühlmittel zugeführt wird, derart, dass die Steuerung des Flusses über den ersten Auslass und den zweiten Auslass die Durchflussrate des Eingangskühlmittels steuert.

## Revendications

1. Système de régulation de température d'air de cabine de véhicule disposé pour être prévu, en utilisation, dans une cabine de véhicule et pour fournir de l'air de cabine refroidi destiné à être utilisé dans la cabine de véhicule, le système comprenant :
une pompe (230) de fluide frigorigène ;
une électrovanne (220) à trois voies à deux positions avec une entrée (221) disposée pour aspirer un fluide frigorigène fourni par la pompe (230), une première sortie (222) et une seconde sortie (223) ;
un régulateur (210) disposé pour réguler un écoulement du fluide frigorigène par l'intermédiaire de la première sortie et de la seconde sortie de l'électrovanne ;
un échangeur de chaleur d'air de cabine (260) ;
un tronçon de refroidissement (245) reliant la première sortie (222) de l'électrovanne (220) à trois voies à l'échangeur de chaleur d'air de cabine ;
un tronçon de dérivation (225) reliant la seconde sortie (223) de l'électrovanne (220) à trois voies à la pompe (230) en contournant l'échangeur de chaleur d'air de cabine (260) ;
l'échangeur de chaleur d'air de cabine (260) étant disposé pour obtenir un fluide frigorigène d'entrée par l'intermédiaire du tronçon de refroidissement (245) sur la base de la régulation de l'écoulement par l'intermédiaire de la première sortie et de la seconde sortie et pour acheminer de l'air de cabine refroidi,
et dans lequel l'échangeur de chaleur d'air de cabine est disposé pour obtenir de l'air chaud à partir de la cabine de véhicule et refroidir l'air chaud avec le fluide frigorigène d'entrée afin de fournir l'air de cabine refroidi ;
dans lequel la régulation de l'écoulement du fluide frigorigène par l'intermédiaire de la première sortie et de la seconde sortie régule un débit du fluide frigorigène d'entrée ;
un capteur de température (280) configuré pour mesurer une température de l'air chaud à partir de la cabine de véhicule, en utilisation, fourni à l'échangeur de chaleur d'air de cabine, et pour fournir la température de l'air chaud au régulateur afin de servir de base à la régulation ultérieure de la première sortie et de la seconde sortie ;
dans lequel le régulateur comporte un régulateur proportionnel-intégral-dérivé, PID, (310) et un modulateur de largeur d'impulsion (320) configuré et disposé pour fournir un signal de régulation de modulation de largeur d'impulsion à l'électrovanne à trois voies, et dans lequel le signal de régulation de modulation de largeur d'impulsion est sur la base d'une différence entre une température souhaitée pour la cabine de véhicule et la température de l'air chaud ; et comprenant en outre :
un échangeur de chaleur de refroidissement (240) disposé pour être disposé entre la pompe (230) et l'électrovanne (220).

2. Régulateur de température d'air de cabine de véhicule selon la revendication 1, dans lequel l'échangeur de chaleur de refroidissement (240) est disposé pour refroidir le fluide frigorigène qui est, en utilisation, fourni par la pompe (230) de sorte que le fluide frigorigène refroidi soit aspiré au niveau de l'entrée de l'électrovanne et acheminé, en utilisation, vers le tronçon de refroidissement par l'intermédiaire de la première sortie ou vers le tronçon de dérivation par l'intermédiaire de la seconde sortie de l'électrovanne.

3. Procédé d'assemblage d'un système de régulation de température d'air de cabine de véhicule disposé pour être prévu, en utilisation, dans une cabine de véhicule et pour fournir de l'air de cabine refroidi destiné à être utilisé dans la cabine de véhicule, le procédé comprenant :
le positionnement d'une électrovanne (220) à trois voies à deux positions avec une entrée (221), une première sortie (222) et une seconde sortie (223) destinées à aspirer un fluide frigorigène fourni par une pompe (230) de fluide frigorigène ;
la configuration d'un régulateur (210) pour réguler un écoulement du fluide frigorigène par l'intermédiaire de la première sortie et de la seconde sortie de l'électrovanne,
la disposition d'un échangeur de chaleur d'air de cabine (260) pour obtenir un fluide frigorigène d'entrée sur la base de la régulation de l'écoulement par l'intermédiaire de la première sortie et de la seconde sortie et pour fournir de l'air de cabine refroidi à la cabine de véhicule,
la liaison de la première sortie (222) de l'électrovanne (220) à trois voies à l'échangeur de chaleur d'air de cabine par l'intermédiaire d'un tronçon de refroidissement (245) ;
la liaison de la seconde sortie (223) de l'électrovanne (220) à trois voies à la pompe (230) en contournant l'échangeur de chaleur d'air de cabine (260) par l'intermédiaire d'un tronçon de dérivation (225) ;
la disposition de l'échangeur de chaleur d'air de cabine (260) pour obtenir un fluide frigorigène d'entrée par l'intermédiaire du tronçon de refroidissement (245) sur la base de la régulation de l'écoulement par l'intermédiaire de la première sortie et de la seconde sortie et pour acheminer de l'air de cabine refroidi,
et dans lequel l'échangeur de chaleur d'air de cabine est disposé pour obtenir de l'air chaud à partir de la cabine de véhicule et refroidir l'air chaud avec le fluide frigorigène d'entrée afin de fournir l'air de cabine refroidi ;
dans lequel la régulation de l'écoulement du fluide frigorigène par l'intermédiaire de la première sortie et de la seconde sortie régule un débit du fluide frigorigène d'entrée ;
la disposition d'un capteur de température (280) pour mesurer une température de l'air chaud à partir de la cabine de véhicule fourni à l'échangeur de chaleur d'air de cabine, et pour fournir la température de l'air chaud au régulateur afin de servir de base à la régulation ultérieure de la première sortie et de la seconde sortie ;
dans lequel la configuration du régulateur comporte la configuration du régulateur pour qu'il comporte un régulateur proportionnel-intégral-dérivé, PID, (310) et un modulateur de largeur d'impulsion (320) pour fournir un signal de régulation de modulation de largeur d'impulsion à l'électrovanne à trois voies, et optionnellement, dans lequel le signal de régulation de modulation de largeur d'impulsion est sur la base d'une différence entre une température souhaitée pour la cabine de véhicule et la température de l'air chaud ; et
comprenant en outre la disposition d'un échangeur de chaleur de refroidissement (240) entre la pompe et l'électrovanne.

4. Procédé selon la revendication 3, dans lequel la disposition de l'échangeur de chaleur de refroidissement comporte la disposition de l'échangeur de chaleur de refroidissement pour refroidir le fluide frigorigène qui est fourni par la pompe de sorte que le fluide frigorigène refroidi soit aspiré au niveau de l'entrée de l'électrovanne et acheminé vers le tronçon de refroidissement par l'intermédiaire de la première sortie ou vers le tronçon de dérivation par l'intermédiaire de la seconde sortie de l'électrovanne, et optionnellement, dans lequel la disposition de l'échangeur de chaleur d'air de cabine ne comporte que le fluide frigorigène refroidi acheminé vers le tronçon de refroidissement par l'intermédiaire de la première sortie, qui est fourni comme fluide frigorigène d'entrée à l'échangeur de chaleur d'air de cabine, de sorte que la régulation de l'écoulement par l'intermédiaire de la première sortie et de la seconde sortie régule le débit du fluide frigorigène d'entrée.
